# EUROPÄISCHE PATENTSCHRIFT

(11) **EP 1 157 773 B1**
(45) Veröffentlichungstag und Bekanntmachung des Hinweises auf die Patenterteilung: **06.09.2006**
(21) Anmeldenummer: 01108538.8
(22) Anmeldetag: 05.04.2001
(51) Int. Cl.: B23K 11/00, B23K 11/34, B23K 33/00, B23K 11/06, B21B 15/00

(54) **Verfahren und Vorrichtung zum Verbinden der Enden zweier Metallbänder**
Process and apparatus for joining the ends of metal strips
Procédé et appareil pour relier les extrémités de deux bandes métalliques

(30) Priorität: 23.05.2000 DE 10025159
(43) Veröffentlichungstag der Anmeldung: 28.11.2001
(73) Patentinhaber: Sundwig GmbH, 58675 Hemer (DE); A.I. WELDERS LIMITED, Inverness, IV1 1LZ, Scotland (GB)
(72) Erfinder: Boguslawsky, Klaus, 58640 Iserlohn (DE); MacKenzie, Ian, 58706 Menden (DE); Hunter, A.J., GB-Inverness IV2 4EX (GB); Sherriffs, Neill, Culcabock, GB-Inverness IV2 3RU (GB)
(74) Vertreter: Cohausz & Florack

(56) Entgegenhaltungen:
- GB-A- 1 379 994
- US-A- 3 313 911
- US-A- 3 504 427
- PATENT ABSTRACTS OF JAPAN vol. 008, no. 263 (M-342), 4. Dezember 1984 (1984-12-04) & JP 59 137106 A (SUMITOMO KINZOKU KOGYO KK), 7. August 1984 (1984-08-07)
- PATENT ABSTRACTS OF JAPAN vol. 017, no. 651 (M-1519), 3. Dezember 1993 (1993-12-03) & JP 05 212549 A (MITSUBISHI ELECTRIC CORP), 24. August 1993 (1993-08-24)
- PATENT ABSTRACTS OF JAPAN vol. 010, no. 025 (M-450), 31. Januar 1986 (1986-01-31) & JP 60 184483 A (MITSUBISHI JUKOGYO KK), 19. September 1985 (1985-09-19)
- PATENT ABSTRACTS OF JAPAN vol. 017, no. 385 (M-1448), 20. Juli 1993 (1993-07-20) & JP 05 069151 A (KAWASAKI STEEL CORP), 23. März 1993 (1993-03-23)

## Beschreibung

Die Erfindung betrifft ein Verfahren und eine Vorrichtung zum Verbinden der Enden zweier Metallbänder, insbesondere von allgemeinen Stahlbändern und Edelstahlbändern mit einer Dicke von mehr als 3 mm gemäß dem Oberbegriff der Ansprüche 1 und 8 (siehe, z.B. GB-A 1379994). Derartige Verfahren und Vorrichtungen werden beispielsweise in Fertigungslinien, in denen Edelstahlbänder behandelt werden, eingesetzt, um das Ende eines in der Linie fertig verarbeiteten Bandes mit dem Ende eines neu in die Linie eingespeisten Bandes zu verbinden. Auf diese Weise zieht das schon in der Fertigungslinie befindliche Band das neu zu verarbeitende Band in die Linie ein, so daß der Aufwand für das Einführen des Anfangs des neu zu verarbeitenden Bandes in die einzelnen Verarbeitungsstationen der Verarbeitungslinie reduziert ist.

Auf kostengünstige und zeitsparende Art können die Bandenden der Metallbänder durch Widerstandsschweißen miteinander verbunden werden. Voraussetzung dafür ist, daß die Bandenden vor dem Verschweißen derart aneinander gefügt werden, daß ein enger Kontakt zwischen ihnen sichergestellt ist. Dieser enge Kontakt ist erforderlich, um einen für die Erwärmung ausreichenden Energiefluß zwischen den Elektroden der Schweißeinrichtung zu gewährleisten. Dieses Verfahren eignet sich insbesondere für das Verschweißen von Metallbändern, deren Dicke mehr als 3 mm beträgt. Derartige Bänder lassen sich durch alternative Schweißverfahren wie Schweißen mit Laser nur schwer oder gar nicht miteinander verbinden.

Aus der US 3,504,427 ist eine Einrichtung zum Widerstandsschweißen und ein Verfahren zum Verbinden der Enden von Stahlbändern durch Widerstandsschweißen bekannt, bei dem die zuvor geschliffenen Bandenden über eine kurze Länge überlappend aufeinandergelegt werden. Die aufeinanderliegenden Bandendenabschnitte werden dann durch eine Widerstandsschweißeinrichtung miteinander verschweißt, indem deren als Kontaktrollen ausgebildete Elektroden quer zur Längserstreckung der Bänder über den Überlappungsbereich gerollt werden. Abschließend werden die im Bereich der Schweißnaht aufgrund des Überlappens der Bandenden vorhandenen Unebenheiten in einem weiteren Schleifvorgang entfernt.

Das bekannte Vorgehen beim Zusammenfügen der Enden von Bändern hat den Nachteil, daß ein erheblicher Aufwand für die Vorbereitung der miteinander in Kontakt kommenden Flächen der Bänder getrieben werden muß. Darüber hinaus weisen die miteinander verbundenen Bänder nach dem Verschweißen im Bereich der Schweißstelle Erhebungen auf, deren Höhe, verglichen mit anderen Unebenheiten der Bänder, beträchtlich ist. Dieser Umstand macht es erforderlich, aufwendige Vorkehrungen zu treffen, um beim Durchlauf der Schweißstelle durch die jeweilige Fertigungslinie eine Beschädigung der einzelnen Verarbeitungseinrichtungen sicher zu verhindern. So führt das bei der US 3,504,427 empfohlene Schleifen der Bandenden vor und der Schweißnaht nach dem Verschweißen zu einem erheblichen zusätzlichen zeitlichen und apparativen Aufwand.

Ein weiteres Problem beim Verbinden der Enden von Metallbändern besteht darin, daß diese Bänder im Bereich der betreffenden Enden häufig besonders uneben sind. Die an den Enden vorhandenen Unebenheiten machen es schwierig, die Bandenden in den für das Widerstandsschweißen erforderlichen engen Kontakt zu bringen. Dieses Problem besteht insbesondere bei dickeren Metallbändern, die, wenn Unebenheiten vorhanden sind, aufgrund der ihnen eigenen Steifigkeit beim Widerstandsschweißen nur schwer aneinander gedrückt werden können, um den erforderlichen elektrischen Kontakt herzustellen. In der Praxis werden die unebenen Bandenden daher in einem großen Abstand von der endseitigen Bandkante an einer Stelle abgeschnitten, an der die Größe der im Bereich der Bandendkante selbst vorhandenen Unebenheiten reduziert ist. Die Menge des dabei anfallenden Schrotts ist beträchtlich und führt zu einer weiteren Verminderung der Wirtschaftlichkeit des Verbindens der Bandenden von Stahlbändern durch Widerstandsschweißen.

Neben dem voranstehend erläuterten Stand der Technik ist aus der GB 1 379 994 ein Verfahren zum Verbinden der Enden von Metallbändern bekannt, bei dem die betreffenden Bandenden in jeweils einer Halteeinrichtung gehalten werden. Die Halteeinrichtungen bewegen die Bandenden so gegeneinander, daß sie sich überlappen. Anschließend wird der Überlappbereich von oben und von unten mit jeweils einer Glättungswalze überfahren. Diese Walze schmilzt die betreffenden Kanten auf, so daß sie eine entgegengesetzt angeschrägte Form erhalten. Daraufhin werden die Bandenden um einen geringen Betrag auseinander gezogen, so daß sie mit geringem Abstand im Wesentlichen fluchtend ausgerichtet sind. Schließlich werden die derart geformten und gehaltenen Bandenden miteinander verschweißt. Als nachteilig an dieser Vorgehensweise stellt sich in der Praxis heraus, daß sich so eine optimal ausgebildete Verbindungszone zwischen den Bandenden erzeugen läßt.

Des weiteren ist es aus der JP 59-137106 A bekannt, die Enden von Metallbändern durch Preß- oder Druckschweißen zu verbinden. Zur Vorbereitung des Schweißens werden die Enden der Bänder nacheinander mit einem Prägestempel einer Preßvorrichtung im kalten Zustand in eine stufenartige Form gepreßt. Nach dieser Formgebung der Bandenden werden die dort erzeugten Stufen überlappend ausgerichtet und mit Hilfe von in das Preßwerkzeug integrierter Schweißkontakte punktverschweißt. Während des Schweißens reduziert die Preßvorrichtung die Gesamtdicke der überlappten Bereiche auf die Blechdicke, wobei sich der zur Überlappung eingestellte Versatz der Blechmittelebenen zueinander wieder ausgleicht.

Bei einer aus der JP 05 212549 A bekannten Vorrichtung werden die Bänder direkt nach einem Schneidevorgang überlappend angeordnet und nachfolgend verschweißt. Dabei entstehen im Bereich der Verbindungszone Unebenheiten, die sich bei der Weiterverarbeitung störend auswirken.

In der JP 60 184 483 A ist beschrieben, wie auf Warmwalztemperatur erwärmte Warmbänder vor dem Warmwalzen formschlüssig in einer Weise miteinander verbunden werden können, daß sie beim anschließenden Warmwalzen miteinander verschweißen. Die heißen Bandenden werden dazu mit Hilfe von Pressenstempeln so geformt, daß sie nach dem Aufeinanderlegen der Bandenden ineinander greifen und eine formschlüssige Verbindung zwischen den Bandenden geschaffen ist. Die Form der Bandenden ist dabei so ausgestaltet, daß nach dem Zusammenfügen der Bandenden im Bereich der Fügezone keine Verdickung auftritt. Die derart formschlüssig miteinander verbundenen Bandenden werden in das Warmwalzgerüst eingezogen, in dem sie aufgrund der dort herrschenden Warmwalztemperaturen und Drücke miteinander verschweißt werden.

Schließlich ist in der JP 05-069151 A ein Verfahren vorgeschlagen worden, bei dem die mit Abstand gegenüberliegend angeordneten, einander zugeordneten Bandendkanten zunächst von trapezoid geformten Walzen flach kaltgewalzt werden. Anschließend werden die Bandenden geradlinig aufeinander zu bewegt, teilweise überlappt und verschweißt. Alternativ werden die Bänder überlappend aufeinander gelegt und dann im Überlappungsbereich dünn gewalzt, woraufhin sie etwas zurückgezogen und miteinander verschweißt werden.

Die Aufgabe der Erfindung besteht darin, ausgehend von dem voranstehend erläuterten Stand der Technik ein Verfahren und eine Vorrichtung zu schaffen, welche es ermöglichen, die Enden von Metallbändern in verbesserter Weise miteinander zu verbinden.

Diese Aufgabe wird einerseits durch ein Verfahren zum Verbinden der Enden zweier Metallbänder, insbesondere von Stahlbändern, speziell Edelstahlbändern mit einer Dicke von mehr als 3 mm, gelöst, umfassend folgende Schritte:
- Ausrichten der Enden derart, daß das Ende des einen Metallbandes dem Ende des anderen Metallbandes gegenüberliegend angeordnet ist,
- Beschneiden der Enden der Metallbänder,
- Fügen der heißverformten Enden,
- Heißformen der einander mit Abstand gegenüberliegend zugeordneten Enden der Metallbänder mit einer Erwärmungseinrichtung,
- Fügen der heißverformten Enden,
- Verschweißen der zusammengefügten Enden der Metallbänder,
wobei das Heißformen der Enden vor dem Fügen bei zueinander beabstandet angeordneten Enden der Metallbänder durchgeführt wird.

Erfindungsgemäß werden die Bandenden, bevor sie zusammengefügt werden, heißverformt. Im Zuge dieser Heißverformung werden sie so stark erwärmt, daß sie aufgrund ihrer mit der Erwärmung einhergehenden Aufweichung einfach in eine für das Fügen optimierte Form gebracht werden können. Die Form der erwärmten Bandenden kann auf diese Weise problemlos so ausgebildet werden, daß die Bandenden nach dem Heißverformen eine Form aufweisen, die ihr Zusammenfügen ohne die Entstehung einer größeren Erhebung im Bereich der Schweißnaht ermöglichen. So lassen sich an die erwärmten Bandenden zungenartige Endbereiche mit einer gegenüber dem Ausgangszustand verringerten Dicke anformen. Die betreffenden Endbereiche werden anschließend überlappend aufeinander. Im Bereich der derart gebildeten Überlappungszone wird die Kontaktschweißung hergestellt. Auf diese Weise kann eine Schweißverbindung erzeugt werden, deren Dicke im wesentlichen gleich der Banddicke ist.

Eine besonders vorteilhafte Variante des erfindungsgemäßen Verfahrens ist dadurch gekennzeichnet, daß die Bandenden im Zuge der Heißverformung geglättet werden. Durch diesen Glättungsvorgang werden Unebenheiten beseitigt, so daß die heißverformten Bandenden nach dem Fügen in einem dichten Kontakt aufeinander liegen. Diese Maßnahme führt insbesondere dann zu einem verbesserten Schweißergebnis, wenn das Verschweißen mittels einer Widerstandsschweißeinrichtung durchgeführt wird. Dabei eignet sich diese Ausgestaltung der Erfindung insbesondere für das Verbinden der Enden von dickeren Edelstahlbändern von 3 mm bis zu 10 mm, die bei ihrer Anlieferung an einer Kaltbandstraße im Bereich der Bandenden häufig stark uneben sind. Bei erfindungsgemäßer Vorgehensweise können die Bandenden derart dicker Bänder trotz der bestehenden Unebenheiten derart gefügt werden, daß ein für das Verschweißen ausreichender Kontakt zwischen den Bändern sichergestellt ist. Die Menge des beim Verbinden der Bandenden anfallenden Schrotts kann auf diese Weise minimiert werden, da ein Schnitt im Bereich der Bandendkanten in der Regel nur noch benötigt wird, um die Parallelität der endseitigen Kanten der miteinander zu verbindenden Bandenden herzustellen.

Der durch die Erfindung ermöglichte Zeitgewinn, die Präzision der Verbindung der Bandenden und die Ersparnis an Schrott machen das erfindungsgemäße Vorgehen trotz des zusätzlichen Aufwands für die Erwärmungseinrichtung dem bekannten Vorgehen beim Verbinden von Metallbändern überlegen.

Insbesondere dann, wenn die Bandenden durch Widerstandsschweißen miteinander verbunden werden sollen, ist es erforderlichenfalls zweckmäßig, die heißverformten Enden vor dem Fügen zu entzundern. Durch diese Entzunderung wird der im Zuge der Heißverformung in den verformten Bereichen ggf. neu gebildete Zunder derart vorbereitet, daß die Bandenden im zusammengefügten Zustand in einem für den Schweißvorgang ausreichenden direkten Kontakt stehen. Dabei setzt nach dem Verständnis der Erfindung die Entzunderung nicht voraus, daß die Bandenden notwendigerweise über ihre gesamte Breite von Zunder befreit werden. Statt dessen kann es in Abhängigkeit von den Erfordernissen des jeweils angewendeten Schweißverfahrens ausreichen, die Zunderschicht jeweils auf kleine Zonen beschränkt zu entfernen oder aufzubrechen.

Die Ausbildung von Überlappungszonen mit für das Verschweißen ausreichender Längserstreckung kann dadurch vereinfacht werden, daß das Ende des einen Bandes im Zuge des Heißformens eine Form erhält, die entgegengesetzt der Form ausgebildet ist, die das Ende des anderen Bandes erhält. Der nach dem Fügen gebildete Überlappungsbereich derart gegensätzlich geformter Bandenden weist eine Dicke auf, deren Größe trotz der Erstreckung des Überlappungsbereichs in Längsrichtung der Bänder im wesentlichen gleich der Dicke der Bänder selbst ist. Verfahrenstechnisch einfach läßt sich eine solche gegensätzliche Formgebung der Bandenden dadurch bewerkstelligen, daß die endseitigen Stirnflächen der Bänder gegenläufig angeschrägt werden, so daß sie eine im Querschnitt keil- oder zungenförmige Gestalt erhalten.

Selbstverständlich kann die Heißverformung der Bandenden nacheinander durchgeführt werden. Diese Vorgehensweise läßt sich insbesondere dann kostengünstig verwirklichen, wenn für das Heißverformen diejenige Widerstandsschweißeinrichtung verwendet wird, mit welcher nach dem Zusammenfügen die Schweißverbindung der Bandenden erzeugt wird. Der für die Heißverformung anfallende Zeitbedarf ist jedoch dann verkürzt, wenn das Heißverformen der einander zugeordneten Enden der Bänder gleichzeitig erfolgt. Neben der verfahrensmäßigen Lösung wird die oben genannte Aufgabe durch eine Vorrichtung zum Verbinden der Enden von Metallbändern, insbesondere von Stahlbändern, speziell Edelstahlbändern mit einer Dicke von mehr als 3 mm, gelöst, die
- eine Einrichtung zum Halten und Ausrichten der Enden der Metallbänder,
- eine Schere zum Beschneiden der Enden der Metallbänder,
- eine Einrichtung zum Heißverformen der einander zugeordneten Enden der Metallbänder, sowie
- eine Einrichtung zum Verschweißen der einander zugeordneten Enden der Metallbänder
umfasst, wobei die Einrichtung zum Halten und Ausrichten der Enden dazu bestimmt ist, die einander zugeordneten Enden der Metallbänder während des Heißverformens in einem Abstand zu halten.

Dabei ist es besonders günstig, wenn die Einrichtung zum Heißverformen als Widerstandserwärmungseinrichtung ausgebildet ist. Mit derartigen Erwärmungseinrichtungen läßt sich die Heißverformung gezielt steuern und exakt auf den jeweiligen Endbereich beschränkt durchführen. Dabei kann vorteilhaft auf Erwärmungseinrichtungen zurückgegriffen werden, welche als solche schon für das Widerstandsschweißen der Enden von Stahlbändern eingesetzt werden. Diese Einrichtungen umfassen in der Regel mindestens eine Kontaktrolle, welche entlang der heißzuverformenden Enden bewegbar ist. Angeschrägte Bandenden lassen sich mit einer solchen Kontaktrolle dadurch erzeugen, daß die Drehachse der Kontaktrolle in Bezug auf die Oberseite des Bandes in einem Winkel angeordnet ist. Alternativ oder ergänzend kann das Profil der zu erzeugenden Form der Bandkante auch dadurch vorgegeben werden, daß die Umfangsfläche der Kontaktrolle in entsprechender Weise profiliert ist. So lassen sich angeschrägte Endbereiche auch durch konisch geformte Kontaktrollen erzeugen, die um eine parallel zur Oberseite des Bandes angeordnete Drehachse dreht.

Eine Glättung von Unebenheiten im Bereich der miteinander zu verbindenden Bandenden kann auf einfache Weise dadurch erreicht werden, daß zwei Kontaktrollen paarweise entlang der Enden bewegbar sind, wobei eine Kontaktrolle der Oberseite und eine Kontaktrolle der dieser Oberseite gegenüberliegenden Unterseite des Bandes zugeordnet ist. Zeitgleich mit dem Glätten läßt sich eine Anschrägung des Bandendes bewerkstelligen, wenn die Drehachse einer Kontaktrolle in Bezug auf die Oberfläche des Bandes winklig angeordnet ist, während die Drehachse der anderen Kontaktrolle parallel zur Oberfläche des Bandes liegt.

Weiter vorteilhafte Ausgestaltungen der Erfindung sind in den abhängigen Ansprüchen angegeben und werden in der nachfolgenden Beschreibung eines Ausführungsbeispieles näher erläutert. In der beigefügten Zeichnung zeigen:
- Fig. 1: eine Vorrichtung zum Verbinden der Enden von zwei in einer Fertigungslinie zu verarbeitenden Warmbändern in einer ersten Arbeitsstellung in seitlicher Ansicht;
- Fig. 2: die Vorrichtung gemäß Fig. 1 in einer zweiten Arbeitsstellung in seitlicher Ansicht;
- Fig. 3: die Vorrichtung gemäß Fig. 1 in einer dritten Arbeitsstellung in seitlicher Ansicht;
- Fig. 4: die Vorrichtung gemäß Fig. 1 in einer vierten Arbeitsstellung in seitlicher Ansicht;
- Fig. 5: die Vorrichtung gemäß Fig. 4 in der vierten Arbeitsstellung in einer Ansicht entlang der in Fig. 4 eingetragenen Linie I - I;
- Fig. 6: eine zur Vorrichtung gemäß Fig. 1 alternative Vorrichtung einer der Fig. 4 entsprechenden Arbeitsstellung in seitlicher Ansicht;
- Fig. 7: die Vorrichtung gemäß Fig. 1 in einer fünften Arbeitsstellung in seitlicher Ansicht;
- Fig. 8: die Vorrichtung gemäß Fig. 1 in einer sechsten Arbeitsstellung in seitlicher Ansicht;
- Fig. 9: die Vorrichtung gemäß Fig. 8 in der vierten Arbeitsstellung in einer Ansicht entlang der in Fig. 8 eingetragenen Linie II - II;
- Fig. 10: die fertig miteinander verbundenen Bandenden in seitlicher Ansicht.

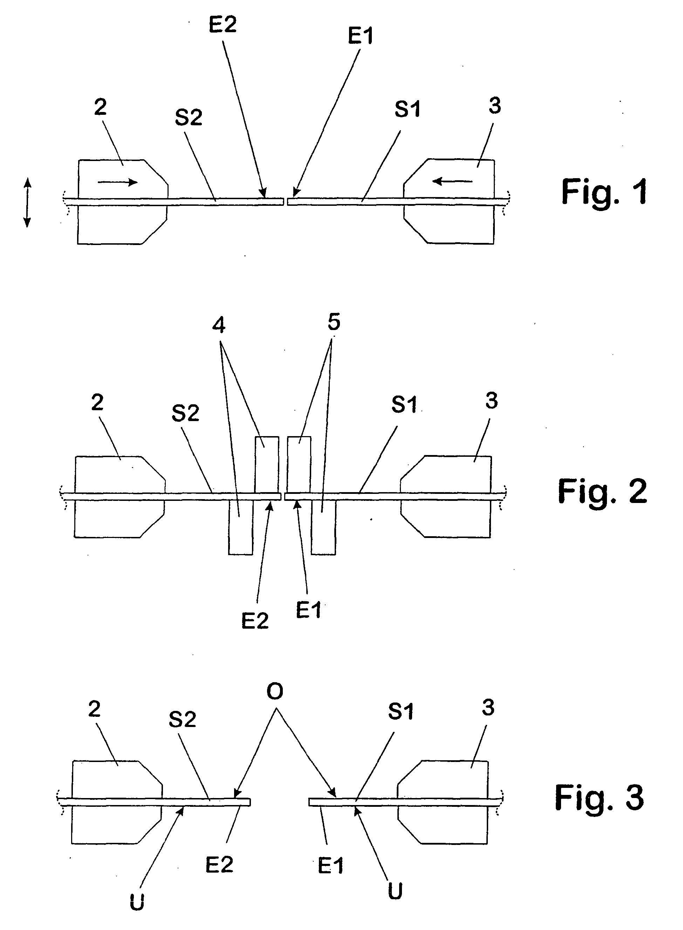

Die in den Fig. 1 bis 5 und 7 bis 9 gezeigte Vorrichtung zum Verbinden der Enden von zwei in einer Fertigungslinie zu verarbeitenden Warmbändern weist zwei Einrichtungen 2,3 (nachfolgend der Einfachheit halber "Halte- und Ausrichteinrichtungen 2,3" genannt) auf, welche die Enden E1,E2 von mehr als 4 mm dicken Edelstahlbändern S1,S2 halten und ausrichten. Jedem Ende E1,E2 der Edelstahlbänder S1,S2 ist darüber hinaus jeweils eine in üblicher Weise ausgebildete Schere 4,5 und eine Einrichtung zum Widerstandserwärmeng 6,7 (nachfolgend der Einfachheit halber als " Widerstandserwärmungseinrichtung 6,7" bezeichnet) zugeordnet. Zum Verschweißen der Enden E1,E2 ist schließlich eine Widerstandsschweißeinrichtung 8 vorgesehen.

Die Halte- und Ausrichteinrichtungen 2,3 können in der Höhe verstellt und aufeinander zu bzw. voneinander weg bewegt werden. Die Scheren 4,5 sind als Längsmesserpaare ausgebildet, die quer zur Längserstreckung der Edelstahlbänder S1,S2 schneidend einen Schopfschnitt am jeweiligen Ende E1 bzw. E2 der Edelstahlbänder S1,S2 ausführen.

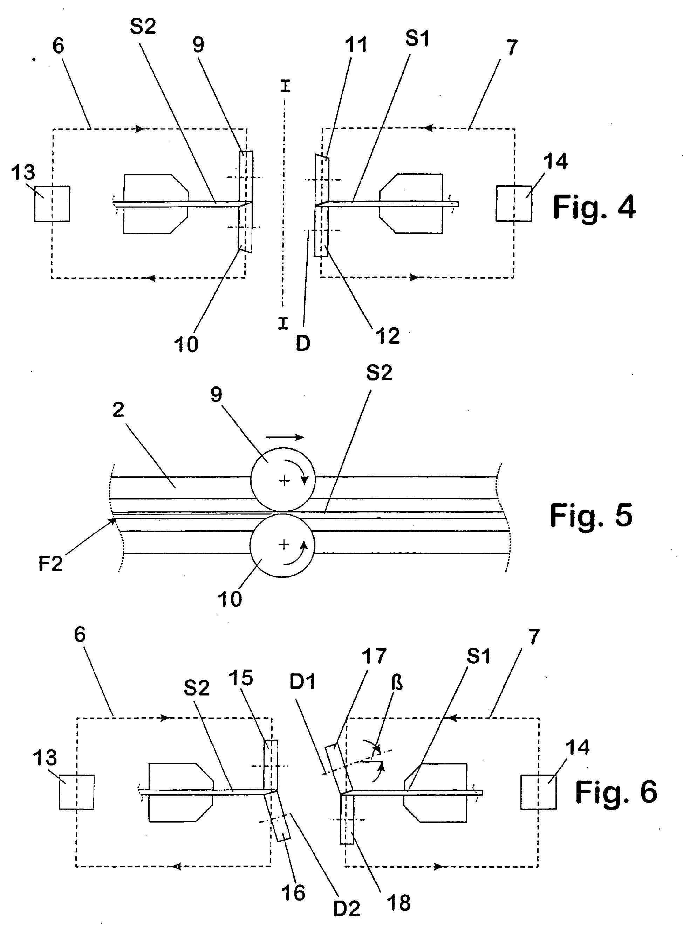

Die Widerstandserwärmungseinrichtungen 6,7 umfassen jeweils zwei quer zur Längserstreckung der Edelstahlbänder S1,S2 auf den Edelstahlbändern bewegbare Kontaktrollen 9,10 bzw. 11,12, die von jeweils einer Energieversorgung 13,14 mit elektrischer Energie gespeist werden. Bei der in Fig. 4 gezeigten Ausgestaltung weist die der Unterseite U des einen Edelstahlbandes S1 zugeordnete Kontaktrolle 10 eine konische Form auf, deren Durchmesser in Richtung der endseitigen Kante K1 des Edelstahlbands S1 zunimmt. In gleicher Weise ist die der Oberseite O des Edelstahlbands S2 zugeordnete Kontaktrolle 11 geformt, deren Durchmesser in Richtung der endseitigen Kante K2 des Edelstahlbands S2 zunimmt. Die der Kontaktrolle 10 bzw. 11 jeweils gegenüberliegende Kontaktrolle 9 bzw. 12 ist zylindrisch geformt. Die Drehachsen D der Kontaktrollen 9 bis 12 sind parallel zueinander und zur Oberseite O der Edelstahlbänder S1,S2 ausgerichtet.

Beim in Fig. 6 dargestellten Ausführungsbeispiel sind vier zylindrische Kontaktrollen 15,16,17,18 vorgesehen. Die Drehachsen D der Kontaktrollen 15 und 18 sind dabei parallel zueinander und zur Oberseite O der Edelstahlbänder S1,S2 ausgerichtet. Die Drehachsen D1,D2 der Kontaktrollen 16,17 sind dagegen in einem Winkel β zur Oberseite O der Edelstahlbänder S1,S2 ausgerichtet. Dieser Winkel β ist nach den jeweiligen Erfordernissen einstellbar.

Die Widerstandsschweißeinrichtung 8 umfaßt schließlich zwei quer zur Längserstreckung der Edelstahlbänder S1,S2 auf den Edelstahlbändern S1,S2 bewegbare Kontaktrollen 19,20, die ebenfalls von einer Energieversorgung 21 mit elektrischer Energie gespeist werden.

Zum Verbinden des Endes E2 des neu in eine weiter nicht dargestellte Behandlungslinie zum Behandelnd von Edelstahlband einzuführenden Edelstahlbands S2 mit dem Ende E1 des in der Fertigungslinie fertig bearbeiteten Edelstahlbands S1 werden die betreffenden Enden E1,E2 von der ihnen jeweils zugeordneten Halte- und Ausrichteinrichtung 2 bzw. 3 fluchtend zueinander so ausgerichtet, daß ihre Stirnflächen eng benachbart angeordnet sind (Fig. 1).

Anschließend werden die Enden E1,E2 mit den Scheren 4,5 beschnitten, um einen parallelen Verlauf der einander zugeordneten endseitigen Kanten K1,K2 der Edelstahlbänder S1,S2 sicherzustellen (Figuren 2,3).

Dann werden die Kontaktrollen 9 bis 12 (Fig. 4) bzw. 15 bis 18 (Fig. 6) auf das ihnen jeweils zugeordnete Ende E1,E2 der Edelstahlbänder S1,S2 aufgesetzt und quer zur Längserstreckung der Edelstahlbänder S1,S2 entlang der Enden E1,E2 gerollt. Aufgrund des zwischen den Kontaktrollen 9 bis 12 bzw. 15 bis 18 fließenden Stroms wird dabei der jeweils zwischen den Kontaktrollen befindliche Endabschnitt erhitzt. Im Bereich des derart erwärmten und dadurch weichen und auf einfache Weise plastisch verformbaren Abschnitts erhält die jeweilige endseitige Stirnfläche F1,F2 einen angeschrägten im Querschnitt keilförmigen Verlauf, dessen Form beim Ausführungsbeispiel gemäß Fig. 4 durch die Kontur der Kontaktrollen 10,11 und beim Ausführungsbeispiel gemäß Fig. 6 durch den Winkel β vorgegeben ist, unter dem die Drehachsen D1,D2 der Kontaktrollen 16,17 angeordnet sind. Dabei ist der Verlauf der Stirnflächen F1,F2 derart gegensätzlich schräg ausgebildet, daß beim Edelstahlband S1 die Stirnfläche F1 einen spitzen Winkel zwischen sich und der Unterseite U einschließt, während beim Edelstahlband S2 zwischen der Stirnfläche F2 und der Oberseite O der spitze Winkel eingeschlossen ist. Gleichzeitig mit dem Formen der Stirnflächen F1,F2 wird durch die jeweilige zylindrische Kontaktrolle das jeweilige Ende E1,E2 der Edelstahlbänder S1,S2 geglättet (Figuren 4,5,6).

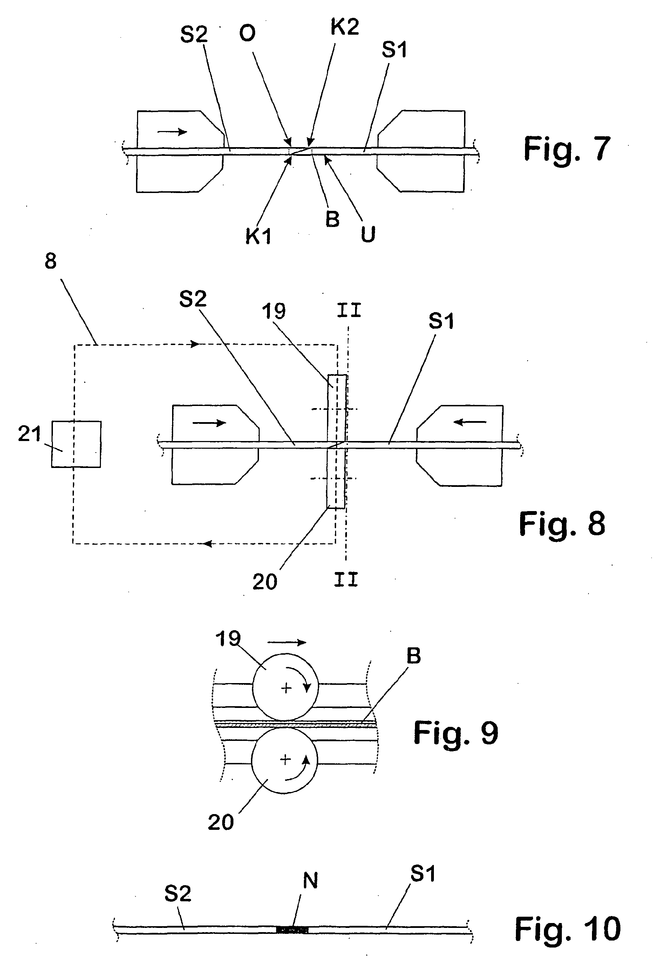

Die derart an ihren Enden E1,E2 mit zueinander gegenläufigen Anschrägungen versehenen Edelstahlbänder S1,S2 werden dann mit Hilfe der Halte- und Ausrichteinrichtungen 2,3 gefügt, indem sie in einer geradlinigen Bewegung aufeinander zu bewegt werden, bis sich die angeschrägten Stirnflächen F1,F2 in einem Überlappungsbereich B überdecken (Fig. 7).

Zum Verschweißen der Enden E1,E2 werden schließlich die Kontaktrollen 19,20 der Widerstandschweißeinrichtung 8 an einem seitlichen Ende des Überlappungsbereichs B auf die Edelstahlbänder S1,S2 aufgesetzt und quer zu deren Längserstreckung über den Überlappungsbereich 8 gerollt. Aufgrund des zwischen den Kontaktrollen 19,20 fließenden Stroms kommt es dabei zu einer Erwärmung des sich jeweils zwischen den Kontaktrollen 19,20 befindenden Abschnitts, so daß die Enden E1,E2 der Edelstahlbänder S1, S2 miteinander verschweißt werden (Fig. 8,9). Die auf diese Weise erzeugte Schweißnaht N weist eine Dicke auf, welche im wesentlichen gleich der Dicke der Edelstahlbänder S1,S2 ist.

### BEZUGSZEICHEN

- 2,3: Einrichtungen zum Halten uns Ausrichten (Halte- und Ausrichteinrichtungen)
- 4,5: Scheren
- 6,7: Widerstandserwärmungseinrichtung
- 8: Widerstandsschweißeinrichtung
- 9,10,11,12: Kontaktrollen
- 13,14: Energieversorgungen
- 15,16,17,18: Kontaktrollen
- 19,20: Kontaktrollen
- 21: Energieversorgung
- B: Überlappungsbereich
- D: Drehachsen der Kontaktrollen
- D1,D2: Drehachsen der Kontaktrollen 16,17
- E1,E2: Enden
- F1,F2: Stirnflächen
- K1: Kante des Edelstahlbands S1
- K2: Kante des Edelstahlbands S2
- N: Schweißnaht
- O: Oberseite
- S1,S2: Edelstahlbänder
- β: Winkel
- U: Unterseite der Edelstahlbänder S1,S2

## Patentansprüche

1. Verfahren zum Verbinden der Enden (E1,E2) zweier Metallbänder, insbesondere von Stahlbändern, speziell Edelstahlbändern (S1,S2), mit einer Dicke von mehr als 3 mm, umfassend folgende Schritte:
- Ausrichten der Enden (E1,E2) derart, daß das Ende (E1) des einen Metallbandes dem Ende (E2) des anderen Metallbandes gegenüberliegend angeordnet ist,
- Beschneiden der Enden (E1,E2) der Metallbänder,
- Heißformen der einander zugeordneten Enden (E1,E2) der Metallbänder mit einer Erwärmungseinrichtung,
- Fügen der heißverformten Enden (E1,E2),
- Verschweißen der zusammengefügten Enden (E1,E2) der Metallbänder, **dadurch**
**gekennzeichnet, daß**
das Heißformen der Enden (E1,E2) vor dem Fügen bei zueinander beabstandet angeordneten Enden (E1,E2) der Metallbänder durchgeführt wird.

2. Verfahren nach Anspruch 1, **dadurch gekennzeichnet, daß** die Enden (E1, E2) der Metallbänder im Zuge des Heißformens geglättet werden.

3. Verfahren nach einem der voranstehenden Ansprüche, **dadurch gekennzeichnet, daß** vor dem Fügen im Bereich der heißverformten Enden (E1,E2) eine Entzunderung durchgeführt wird.

4. Verfahren nach einem der voranstehenden Ansprüche, **dadurch gekennzeichnet, daß** das Ende (E1) des einen Metallbandes im Zuge des Heißformens eine Form erhält, die entgegengesetzt der Form ausgebildet ist, die das Ende (E2) des anderen Metallbandes erhält.

5. Verfahren nach Anspruch 4, **dadurch gekennzeichnet, daß** die endseitigen Stirnflächen (F1,F2) der Metallbänder angeschrägt werden.

6. Verfahren nach einem der voranstehenden Ansprüche, **dadurch gekennzeichnet, daß** das Verschweißen der Enden (E1,E2) der Metallbänder als Widerstandsschweißen durchgeführt wird.

7. Verfahren nach einem der voranstehenden Ansprüche, **dadurch gekennzeichnet, daß** das Heißverformen der einander zugeordneten Enden (E1,E2) der Metallbänder gleichzeitig erfolgt.

8. Vorrichtung zum Verbinden der Enden (E1,E2) von Metallbändern, insbesondere von Stahlbändern, speziell Edelstahlbändern (S1,S2) mit einer Dicke von mehr als 3 mm, umfassend:
- eine Schere (4,5) zum Beschneiden der Enden (E1,E2) der Metallbänder,
- eine Einrichtung (6,7) zum Heißverformen der einander zugeordneten Enden (E1,E2) der Metallbänder, sowie
- eine Einrichtung (8) zum Verschweißen der einander zugeordneten Enden (E1,E2) der Metallbänder,
**dadurch gekennzeichnet, daß** die Vorrichtung weiter umfaß, wobei die Einrichtung (2,3) zum Halten und Ausrichten der Enden (E1,E2) dazu bestimmt ist, die einander zugeordneten Enden (E1,E2) der Metallbänder während des Heißverformens in einem Abstand zu halten.

9. Vorrichtung nach Anspruch 8, **dadurch gekennzeichnet, daß** die Einrichtung (6,7) zum Heißverformen als Widerstandserwärmungseinrichtung ausgebildet ist.

10. Vorrichtung nach Anspruch 9, **dadurch gekennzeichnet, daß** die Einrichtung (6,7) zum Heißverformen mindestens eine Kontaktrolle (9-12;15-18) umfaßt, welche entlang der heißzuverformenden Enden (E1,E2) bewegbar ist.

11. Vorrichtung nach Anspruch 10, **dadurch gekennzeichnet, daß** die Drehachse (D,D1,D2) der Kontaktrolle (9-12;15-18) in Bezug auf eine Oberseite (O) des Metallbandes in einem Winkel (β) angeordnet ist.

12. Vorrichtung nach einem der Ansprüche 10 oder 11, **dadurch gekennzeichnet, daß** die Umfangsfläche der Kontaktrolle (9-12;15-18) profiliert ist.

13. Vorrichtung nach einem der Ansprüche 10 bis 12, **dadurch gekennzeichnet, daß** zwei Kontaktrollen (9-12;15-18) paarweise entlang der Enden (E1,E2) bewegbar sind, wobei eine Kontaktrolle (9,11;15,17) der Oberseite (O) und eine Kontaktrolle (10,12;16,18) der Unterseite (U) des Metallbandes zugeordnet ist.

14. Vorrichtung nach den Ansprüchen 12 und 13, **dadurch gekennzeichnet, daß** die Drehachse (D) einer Kontaktrolle (15,17) in Bezug auf die Oberfläche (O) des Metallbandes winklig angeordnet ist, während die Drehachse (D1,D2) der anderen Kontaktrolle (16,18) parallel zur Oberfläche (O) des Metallbandes liegt.

15. Vorrichtung nach einem der Ansprüche 8 bis 14, **dadurch gekennzeichnet, daß** die Einrichtung (8) zum Verschweißen als Widerstandsschweißeinrichtung ausgebildet ist.

## Claims

1. Method for joining the ends (E1, E2) of two metal strips, in particular of steel strips, especially of stainless steel strips (S1, S2), with a thickness of more than 3 mm, comprising the following steps:
- Alignment of the ends (E1, E2) in such a way that the end (E1) of the one metal strip is arranged opposite the end (E2) of the other metal strip,
- Cutting of the ends (E1, E2) of the metal strips,
- Hot-forming of the ends (E1, E2) of the metal strips assigned to one another by means of a heating device,
- Joining of the hot-formed ends (E1, E2),
- Welding of the joined ends (E1, E2) of the metal strips,
**characterised in that** the hot-forming of the ends (E1, E2) is carried out before the joining, with the ends (E1, E2) of the metal strips allocated to one another located at a distance from each other.

2. Method according to Claim 1, **characterised in that** the ends (E1, E2) of the metal strips are smoothed in the course of hot-forming.

3. Method according to either of the foregoing Claims, **characterised in that**, before joining in the area of the hot-formed ends (E1, E2) a descaling process is carried out.

4. Method according to any one of the foregoing Claims, **characterised in that** the end (E1) of the one metal strip is given a shape in the course of the hot-forming which is designed to be the opposite to that which the end (E2) of the other metal strip is given.

5. Method according to Claim 4, **characterised in that** the end-side face surfaces (F1, F2) of the metal strips are shaped obliquely.

6. Method according to any one of the foregoing Claims, **characterised in that** the welding of the ends (E1, E2) of the metal strips is carried out as resistance welding.

7. Method according to any one of the foregoing Claims, **characterised in that** the hot-forming of the ends (E1, E2) of the metal strips dedicated to one another takes place simultaneously.

8. Apparatus for joining the ends (E1, E2) of metal strips, in particular of steel strips, especially of stainless steel strips (S1, S2), with a thickness of more than 3mm, comprising:
- A set of shears (4, 5) for cutting the ends (E1, E2) of the metal strips
- A device (6, 7) for hot-forming the ends (E1, E2) of the metal strips dedicated to one another, as well as
- A device (8) for welding together the ends (E1, E2) of the metal strips dedicated to one another,
**characterised in that** the apparatus further comprises a device (2, 3) for holding and aligning the ends (E1, E2) of the metal strips, wherein the device (2, 3) for holding and aligning the ends (E1, E2) is further intended to hold the ends (E1, E2) of the metal strips arranged opposite one another at a distance from one another during the hot-forming.

9. Apparatus according to Claim 8, **characterised in that** the device (6, 7) for hot-forming is designed as a resistance heating device.

10. Apparatus according to Claim 9, **characterised in that** the device (6, 7) for hot-forming comprises at least one contact roller (9-12; 15-18), which can be moved along the ends (E1, E2) which are to be hot-formed.

11. Apparatus according to Claim 10, **characterised in that** the axis of rotation (D, D1, D2) of the contact roller (9-12; 15-18) is arranged in relation to an upper side (O) of the metal strip at an angle (β).

12. Apparatus according to either of Claims 10 or 11, **characterised in that** the circumferential surface of the contact roller (9-12; 15-18) is profiled.

13. Apparatus according to any one of Claims 10 to 12, **characterised in that** two contact rollers (9-12; 15-18) can be moved in pairs along the ends (E1, E2), one contact roller (9, 11; 15, 17) being allocated to the upper side (O) and one contact roller (10, 12; 16, 18) being allocated to the under side (U) of the metal strip.

14. Apparatus according to Claims 12 and 13, **characterised in that** the axis of rotation (D) of one contact roller (15, 17) is arranged at an angle in relation to the surface (O) of the metal strip, while the axis of rotation (D1, D2) of the other contact roller (16, 18) lies parallel to the surface (O) of the metal strip.

15. Apparatus according to any one of Claims 8 to 14, **characterised in that** the device (8) for welding is designed as a resistance welding device.

## Revendications

1. Procédé pour l'assemblage des extrémités (E1, E2) de deux feuillards de métal, en particulier de feuillards d'acier, spécialement de feuillard en acier spécial (S1, S2) d'une épaisseur supérieure à 3 mm, comprenant les étapes suivantes:
- Orientation des extrémités (E1, E2) de telle manière que l'extrémité (E1) de l'un des feuillards de métal se trouve disposée vis-à-vis de l'extrémité (E2) de l'autre feuillard de métal,
- Rognage des extrémités (E1, E2) des feuillards de métal,
- Façonnage à chaud des extrémités (E1, E2) des feuillards de métal associées l'une à l'autre, au moyen d'un dispositif de chauffage,
- Assemblage des extrémités (E1, E2) façonnées à chaud,
- Soudage des extrémités (E1, E2) des feuillards de métal réunies,
**caractérisé en ce que**
le façonnage à chaud des extrémités (E1, E2) est effectué avant l'assemblage, les extrémités (E1, E2) des feuillards de métal étant alors à distance l'une de l'autre.

2. Procédé selon la revendication 1, **caractérisé en ce que** les extrémités (E1, E2) des feuillards de métal sont planées au cours du façonnage à chaud.

3. Procédé selon l'une des revendications précédentes, **caractérisé en ce qu'**un décapage est effectué dans la zone des extrémités (E1, E2) façonnées à chaud.

4. Procédé selon l'une des revendications précédentes, **caractérisé en ce que** l'extrémité (E1) de l'un des feuillards de métal reçoit, dans le cadre du façonnage à chaud, une forme qui est opposée à la forme qui est conférée à l'extrémité (E2) de l'autre feuillard de métal.

5. Procédé selon la revendication 4, **caractérisé en ce que** les surfaces frontales (F1, F2) des extrémités des feuillards de métal sont chanfreinées.

6. Procédé selon l'une des revendications précédentes, **caractérisé en ce que** le soudage des extrémités (E1, E2) des feuillards de métal est effectué en tant que soudage par résistance.

7. Procédé selon l'une des revendications précédentes, **caractérisé en ce que** les extrémités (E1, E2) des feuillards de métal associées l'une à l'autre sont simultanément façonnées à chaud.

8. Dispositif Procédé pour l'assemblage des extrémités (E1, E2) de deux feuillards de métal, en particulier de feuillard d'acier, spécialement de feuillard en acier inoxydable (S1, S2) d'une épaisseur supérieure à 3 mm, comprenant:
- des cisailles (4, 5) pour rogner les extrémités (E1, E2) des feuillards de métal associées l'une à l'autre,
- un dispositif (6, 7) pour le façonnage à chaud des extrémités (E1, E2) des feuillards de métal, ainsi
- qu'un dispositif (8) pour souder ensemble les extrémités (E1, E2) des feuillards de métal associées l'une à l'autre,
**caractérisé en ce que**
le dispositif comprend en outre un dispositif (2, 3) pour maintenir et orienter les extrémités (E1, E2) des feuillards de métal, le dispositif (2, 3) pour le maintien et l'orientation des extrémités (E1, E2) étant destiné à maintenir les extrémités (E1, E2) des feuillards de métal associées à distance l'une de l'autre pendant le façonnage à chaud.

9. Dispositif selon la revendication 8, **caractérisé en ce que** le dispositif de façonnage à chaud (6, 7) est conçu en tant que dispositif de chauffage par résistance.

10. Dispositif selon la revendication 9, **caractérisé en ce que** dispositif de façonnage à chaud (6, 7) comprend au moins un galet de contact (9 - 12; 15 - 18) qui peut être déplacé le long des extrémités façonnées à chaud (E1, E2).

11. Dispositif selon la revendication 10, **caractérisé en ce que** l'axe de rotation (D, D1 D2) du galet de contact (9 - 12; 15 - 18) est disposé en suivant un angle (β) par rapport à la face supérieure (O) du feuillard de métal.

12. Dispositif selon revendication 10 ou 11, **caractérisé en ce que** la surface périphérique du galet de contact (9 - 12; 15 - 18) est profilée.

13. Dispositif selon l'une des revendications 10 à 12, **caractérisé en ce que** deux galets de contact (9 - 12, 15 - 18) peuvent être mus par paire le long des extrémités (E1 E2), un galet de contact (9, 11; 15, 17) étant attribué à la face supérieure (O) et un galet de contact (10, 12; 16, 18) étant attribué à la face inférieure (U) du feuillard de métal.

14. Dispositif selon les revendications 12 et 13, **caractérisé en ce que** l'axe de rotation (D) d'un galet de contact (15, 17) est disposé en suivant un angle par rapport à la face supérieure (O) du feuillard de métal, tandis que l'axe de rotation (D1 D2) de l'autre galet de contact (16, 18) est parallèle à la face supérieure (O) du feuillard de métal.

15. Dispositif selon l'une des revendications 8 à 14, **caractérisé en ce que** le dispositif de soudage (8) est conçu en tant que dispositif de soudage par résistance.
